# EUROPEAN PATENT APPLICATION

(11) **EP 2 040 499 A1**
(43) Date of publication of application: **25.03.2009**
(21) Application number: 08153678.1
(22) Date of filing: 29.03.2008
(51) Int. Cl.: H04W 28/06, H04L 29/06

(54) **Image processing apparatus, display apparatus, display system and control method thereof**

(30) Priority: 20.09.2007 KR 20070096137
(71) Applicant: Samsung Electronics Co., Ltd., Suwon-si, Gyeonggi-do 442-742 (KR)
(72) Inventor: Lee, Chang-jin, Gyeonggi-do (KR); Yang, Sun-ho, Seoul (KR)
(74) Representative: Robinson, Ian Michael

(57) **Abstract**

An image processing apparatus (300) includes: a signal receiver which receives an image signal; a signal processor which compresses the image signal; a wireless transmitter which transmits the compressed image signal to a display apparatus (200) wirelessly; and a controller which controls the signal processor to raise a compression rate of the image signal according to an increased distance between the wireless transmitter and the display apparatus (200).

## Description

### BACKGROUND OF THE INVENTION

### Field of the Invention

Apparatuses and methods consistent with the present invention relate to an image processing apparatus, a display apparatus, a display system and a control method thereof, and more particularly, to an image processing apparatus which transmits an image signal to a display apparatus wirelessly, and a display apparatus, a display system and a control method thereof.

### Description of the Related Art

An image processing apparatus such as a set-top box transmits an image signal to an external display apparatus such as a TV. With the development of technology and to meet user's demands, the image processing apparatus transmits an image signal wirelessly to the mobile display apparatus. In this case, the image signal is compressed or non-compressed depending on a frequency bandwidth to be transmitted from the image processing apparatus to the display apparatus.

If a distance between the image processing apparatus and the display apparatus increases, the image signal is transmitted at a slower rate. That is, if the distance increases, the display apparatus may not receive the image signal from the image processing apparatus in a normal manner. Recently, as a number of large-sized display apparatuses are provided, the image signal transmitted by the image processing apparatus has a fixed compression rate in consideration of resolution of the display apparatus. If the compression rate of the image signal is fixed, the image may not be displayed normally as the distance between the image processing apparatus and the display apparatus increases.

### SUMMARY OF THE INVENTION

According to the present invention there is provided an image processing apparatus, a display apparatus, and a control method as set forth in the appended claims. Other features of the invention will be apparent from the dependent claims, and the description which follows.

An aspect of the present invention provides an image processing apparatus which outputs an image signal having a compression rate adjusted corresponding to a distance from a display apparatus.

Also, it is another aspect of the present invention to provide a display apparatus which supplies information on a distance from an image processing apparatus, to the image processing apparatus.

Further, it is another aspect of the present invention to provide a display system which displays a normal image signal regardless of a distance between an image processing apparatus and a display apparatus.

Further, it is another aspect of the present invention to provide a display system which displays a normal image signal regardless of an external environment for a wireless communication.

Additional aspects of the present invention will be set forth in part in the description which follows and, in part, will be obvious from the description, or may be learned by practice of the present invention.

The foregoing and/or other aspects of the present invention are also achieved by providing an image processing apparatus, comprising: a signal receiver which receives an image signal; a signal processor which compresses the image signal; a wireless transmitter which transmits the compressed image signal to a display apparatus wirelessly; and a controller which controls the signal processor to raise a compression rate of the image signal according to an increased distance between the wireless transmitter and the display apparatus.

A transmission rate of the image signal may decrease as the compression rate increases.

The controller may determine a minimum compression rate of the image signal corresponding to the distance, and control the compression rate to be the minimum compression rate and above.

The controller may determine the minimum compression rate by comparing the transmission rate of the image signal with a reception rate of the image signal received to the display apparatus.

The image processing apparatus may further comprise a storage unit which stores therein a lookup table on the compression rate corresponding to the distance.

The image processing apparatus may further comprise a distance determiner which determines the distance.

The wireless transmitter may transmit the compressed image signal through IEEE 802.11n.

The foregoing and/or other aspects of the present invention are also achieved by providing an image processing apparatus, comprising: a signal receiver which receives an image signal; a signal processor which compresses the image signal; a wireless transmitter which transmits the compressed image signal to a display apparatus wirelessly; and a controller which determines a maximum transmission rate of an image signal by comparing a transmission rate of the image signal transmitted to the display apparatus with a reception rate of the image signal received to the display apparatus, and adjusts a compression rate of the image signal based on the maximum transmission rate.

The compression rate may decrease as the maximum transmission rate increases.

The foregoing and/or other aspects of the present invention are also achieved by providing a display apparatus which has a display unit, comprising: a user input unit which is provided to input a distance from an image processing apparatus supplying an image signal; a UI (user interface) generator which generates UI information; a wireless communicator; and a controller which controls the UI generator to display a distance input window on the display unit if a control signal is received through the user input unit to input the distance, and controls the wireless communicator to transmit the inputted distance to the image processing apparatus.

The display apparatus may further comprise a distance determiner which determines the distance.

The foregoing and/or other aspects of the present invention are also achieved by providing a display system which has a display apparatus having a display unit and an image processing apparatus transmitting an image signal to the display apparatus wirelessly, the display system comprising: the display apparatus comprising a user input unit to input a distance from the image processing apparatus; a UI (user interface) generator to generate UI information; a first wireless communicator; a first controller which controls the UI generator to display a distance input window on the display unit if a control signal is received through the user input unit to input the distance, and control the first wireless communicator to transmit the inputted distance to the image processor, the image processing apparatus comprising a signal receiver which receives the image signal from the outside; a signal processor which compresses the image signal; a second wireless communicator which receives the distance from the image processing apparatus and transmits the compressed image signal to the display apparatus; and a second controller which controls the signal processor to transmit an image signal having different compression rates depending on the received distance, to the display apparatus.

The compression rate may increase as the distance increases.

The first controller may determine a minimum compression rate of the image signal corresponding to the distance, and control the compression rate to be the minimum compression rate and above.

The first controller may determine the minimum compression rate by comparing a transmission rate of the image signal with a reception rate of the image signal received to the display apparatus.

The foregoing and/or other aspects of the present invention are also achieved by providing a control method of an image processing apparatus which transmits an image signal to a display apparatus, the control method comprising: determining a distance from the display apparatus; determining a minimum compression rate of the image signal corresponding to the distance; processing the image signal to make a compression rate of the image signal be the minimum compression rate and above; and transmitting the processed image signal to the display apparatus.

The determining the distance may comprise receiving information on the distance from the outside.

The transmitting the image signal may comprise transmitting the compressed image signal through IEEE 802.11n.

### BRIEF DESCRIPTION OF THE DRAWINGS

The above and/or other aspects of the present invention will become apparent and more readily appreciated from the following description of the embodiments, taken in conjunction with the accompanying drawings of which:
FIG. 1 is a control block diagram of an image processing apparatus according to an exemplary embodiment of the present invention;
FIG. 2 illustrates a graph of a transmission rate of an image signal according to the exemplary embodiment of the present invention;
FIG. 3 is a control flowchart to describe a control method of the image processing apparatus according to the exemplary embodiment of the present invention;
FIG. 4 is a control block diagram of an image processing apparatus according to another exemplary embodiment of the present invention;
FIG. 5 is a control block diagram of a display system according to another exemplary embodiment of the present invention; and
FIG. 6 is a control flowchart to describe a control method of the display system according to another exemplary embodiment of the present invention.

### DETAILED DESCRIPTION OF EXEMPLARY EMBODIMENT

Hereinafter, exemplary embodiments of the present invention will be described with reference to accompanying drawings, wherein like numerals refer to like elements and repetitive descriptions will be avoided as necessary.

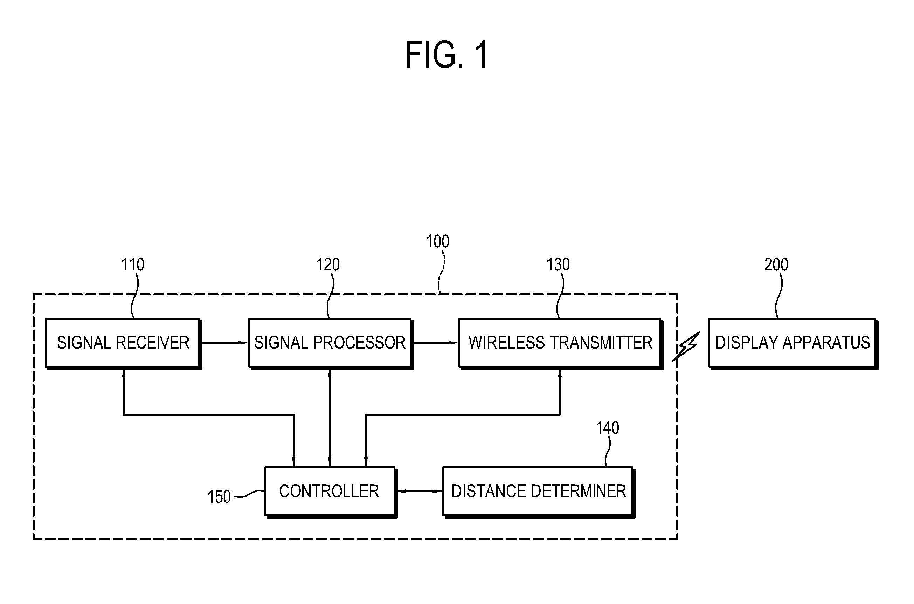

FIG. 1 is a control block diagram of an image processing apparatus according to a first exemplary embodiment of the present invention. An image processing apparatus 100 transmits and receives data including an image signal with respect to a display apparatus 200 wirelessly. The image processing apparatus 100 may include a set-top box. The display apparatus 200 may include a TV which receives an image signal from the set-top box to display the image signal.

As shown therein, the image processing apparatus 100 includes a signal receiver 110, a signal processor 120, a wireless transmitter 130, a distance determiner 140, and a controller 150 to control the foregoing elements.

The signal receiver 110 receives an image signal from the outside. The signal receiver 110 may include a plurality of input terminals (not shown) and/or a broadcasting receiver (not shown) to receive a broadcasting signal. The input terminals may include a HDMI (high definition multimedia interface), a DVI (digital visual interface), a component terminal, an S-video terminal, etc. Each input terminal is connected with an external source such as a computer, a DVD player, a VCR, etc.

The signal processor 120 compresses an image signal inputted through the signal receiver 110 according to a predetermined compression rate. The signal processor 120 includes a decoder (not shown) and a signal compressor (not shown). The image signal which is inputted through the signal receiver 110 is encoded in various formats. The decoder decodes the encoded image signal and then the signal compressor compresses the decoded image signal to be transmitted by the wireless transmitter 130. The decoded image signal is compressed by MPEG-2, JPEG 2000, and other HD (high definition) codec. The signal processor 120 processes a broadcasting signal inputted through the broadcasting receiver such as a tuner.

The image signal is compressed according to a predetermined compression rate. As the compression rate becomes high, the capacity of the image signal data becomes small. As the compression rate rises, a transmission rate of the image signal transmitted to the display apparatus 200 decreases. The transmission rate of the image signal corresponds to the capacity of data transmitted per reference time. If the capacity of the data decreases, the transmission rate is lowered, too. For example, it is assumed that the capacity of the image signal which is transmitted for one second is 200Mb (mega bits). If the image signal is compressed 50%, the capacity of the image signal data is 100Mb. If the image signal is compressed 75%, the capacity of the image signal data is 50Mb. If the compression rate is 50%, the transmission rate is 100Mbps (mega bits per sec). If the compression rate is 75%, the transmission rate is 50Mbps.

The wireless transmitter 130 transmits the image signal processed by the signal processor 120 to the display apparatus 200 through the wireless communication. The wireless communication according to the present embodiment includes IEEE 802.11.n which is a wireless LAN standard defined by IEEE (institute of electrical and electronics engineers). The wireless communication according to the present invention is not limited to that described above, and may vary as long as it transmits the compressed image signal.

The distance determiner 140 determines a distance between the display apparatus 200 and the image processing apparatus 100, and more particularly, a distance between the wireless transmitter 130 and the display apparatus 200. The distance determiner 140 may determine the distance with supersonic waves or infrared rays. The distance determiner 140 may include a signal generator to generate infrared rays or supersonic waves and a signal detector to detect received infrared rays or supersonic waves. Typically, if the distance increases, the capacity of the image signal which can be transmitted from the wireless transmitter 130 to the display apparatus 200 decreases. According to another exemplary embodiment, the distance determiner 140 may be included in the display apparatus 200 instead of in the image processing apparatus 100.

The controller 150 controls the signal processor 120 to raise the compression rate of the image signal according to the increased distance between the wireless transmitter 130 and the display apparatus 200. As described above, if the distance between the wireless transmitter 130 and the display apparatus 200 increases, the capacity of the image signal transmitted for a particular time decreases. For example, if a 100Mb image signal is transmitted for one second by the wireless transmitter 130, i.e. if the image signal is transmitted at a rate of 100Mbps and if the display apparatus 200 receives the 100Mb image signal for one second, the image signal is normally displayed. However, if the distance increases and if the wireless transmitter 130 transmits a 100Mb image signal for one second, the display apparatus 200 may receive a 75Mb or 50Mb image signal for one second instead of a 100Mbps image signal. As the rate of the transmitted image signal is not proper, the image signal displayed on the display apparatus 200 may be broken or deteriorated. Also, continuity of the image signal is not maintained.

Thus, the controller 150 according to the present embodiment controls the compression rate of the image signal in consideration of the distance between the image processing apparatus 100 and the display apparatus 200. If the distance increases and if the capacity of the image signal to be transmitted for one second decreases, the controller 150 raises the compression rate. The controller 150 determines a minimum compression rate of the image signal corresponding to the distance determined by the distance determiner 140, and controls the signal processor 120 to compress the image signal at a compression rate higher than the minimum compression rate. The minimum compression rate is calculated by comparing the transmission rate of the image signal with a reception rate of the image signal received to the display apparatus 200. For example, if the image signal compressed at a 50% compression rate is transmitted at 100Mbps and the reception rate thereof is 75Mbps, the transmission rate should decrease by approximately 25%. That is, as the compression rate should increase by 25%, the minimum compression rate should be set as 75%. The controller 150 controls the signal processor 120 to compress the image signal at a compression rate higher than 75%.

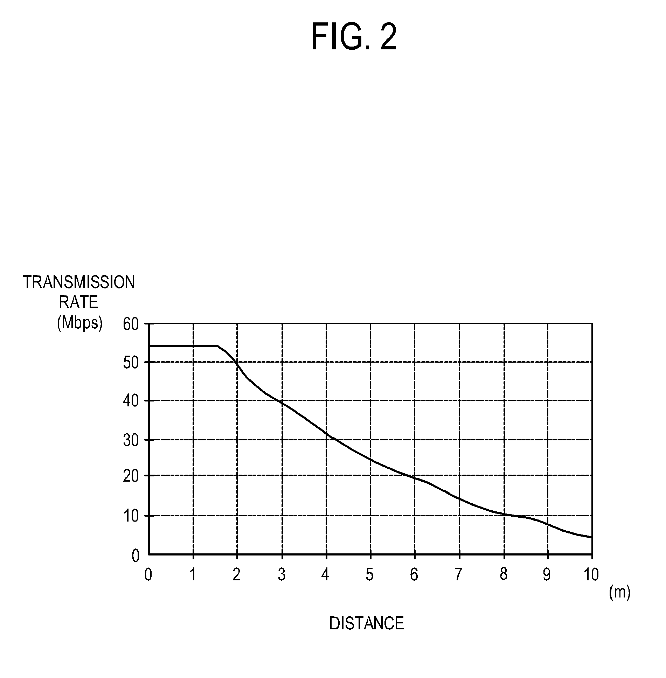

FIG. 2 illustrates a graph of the transmission rate of the image signal according to the present embodiment. The graph in FIG. 2 illustrates the transmission rate of the image signal with respect to the distance, and exemplifies the present embodiment. The wireless communication environment is highly variable depending on the external environment for wireless communication. Thus, a transmission rate may not be set for a particular distance.

As shown therein, as the distance increases, the transmission rate decreases. The transmission rate is almost in inverse proportion to the distance. If the distance ranges from zero to 1.5m, the transmission rate is approximately 54Mbps. The transmission rate decreases at a rate of about 5.9Mbps per meter from 1.5m distance. The transmission rate of the image signal with respect to the 10m distance is about 4Mbps, i.e. approximately 1/13 that of the image signal with respect to a 1m distance. The decreased transmission rate refers to increased compression rate. Thus, the larger the distance is, the lower the compression rate is.

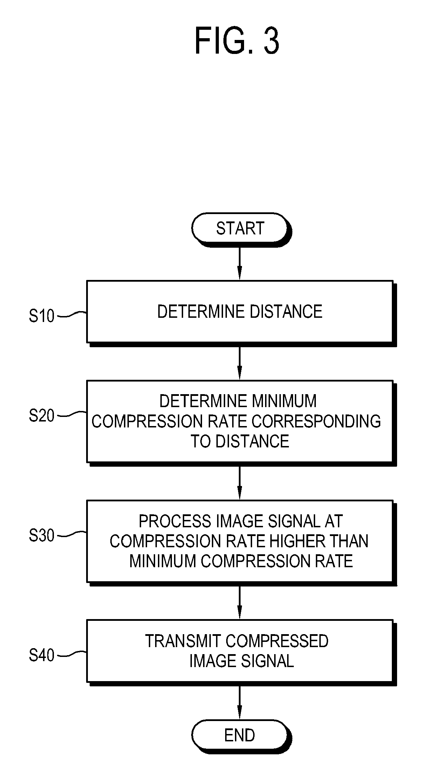

FIG. 3 is a control flowchart to describe a control method of the image processing apparatus 100 according to the present embodiment. Referring to FIG. 3, the control method of the controller 150 will be described.

If the distance determiner 140 determines the distance between the image processing apparatus 100 and the display apparatus 200 (S10), the controller 150 determines the minimum compression rate corresponding to the distance (S20). The minimum compression rate refers to a compression rate which is required to normally display the image signal. If the compression rate of the image signal is higher than the minimum compression rate, the image signal is not normally displayed as the reception rate of the image signal is lower than the transmission rate. In other words, if the compression rate of the image signal is the minimum, the transmission rate becomes the maximum. The controller 150 compares the transmission rate of the image signal transmitted to the display apparatus 200 with the reception rate of the image signal received by the display apparatus 200. If the transmission rate is equivalent to the reception rate, the controller 150 determines that the transmission rate is the maximum.

The controller 150 controls the signal processor 120 to process the image signal at a compression rate higher than the minimum compression rate, i.e. the compression rate of the image signal with the maximum transmission rate (S30). The controller 150 transmits the compressed image signal to the display apparatus 200 through the wireless transmitter 130 (S40).

Even if the information on the distance is not supplied by the distance determiner 140, the controller 150 may compare the transmission rate and the reception rate of the image signal and determine the maximum transmission rate of the image signal. That is, the present invention may control the compression rate of the image signal in consideration of the possible transmission rate change of the image signal depending on the communication environment as well as the distance between the image processing apparatus 100 and the display apparatus 200. The higher the maximum transmission rate is, the lower the compression rate of the image signal is. The lower the maximum transmission rate is, the higher the compression rate is.

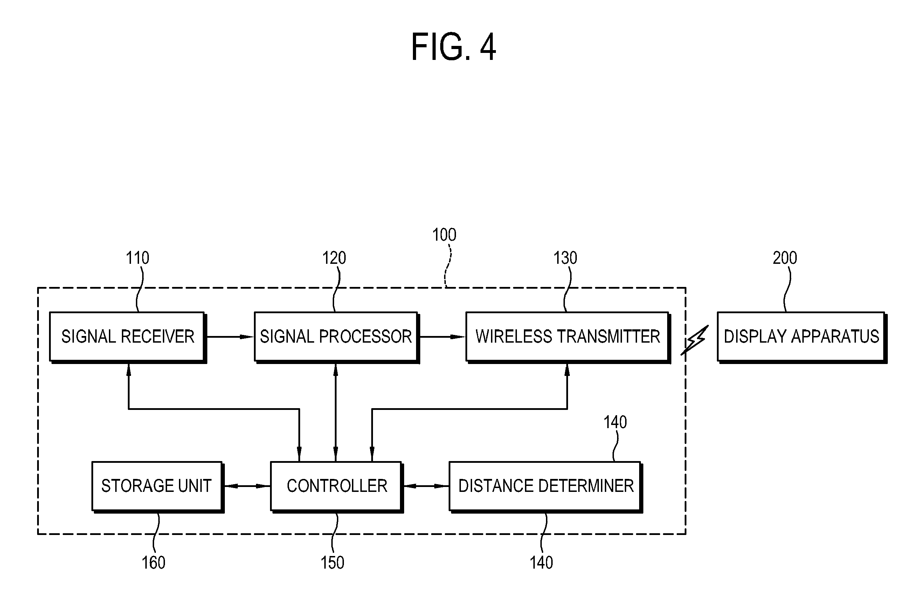

FIG. 4 is a control block diagram of an image processing apparatus according to a second exemplary embodiment of the present invention. As shown therein, the image processing apparatus 100 further includes a storage unit 160. The storage unit 160 stores therein a lookup table on the compression rate corresponding to a distance. The lookup table may reflect various conditions of an external environment for a wireless communication. The conditions of the external environment include whether the wireless communication is performed inside or outside, objects installed in the wireless communication place, materials of the objects, etc. The lookup table includes the minimum compression rate with respect to the distance. Thus, the controller 150 does not need to determine the minimum compression rate with respect to the distance. The communication environment or compression rate of the lookup table may be changed or updated by a user.

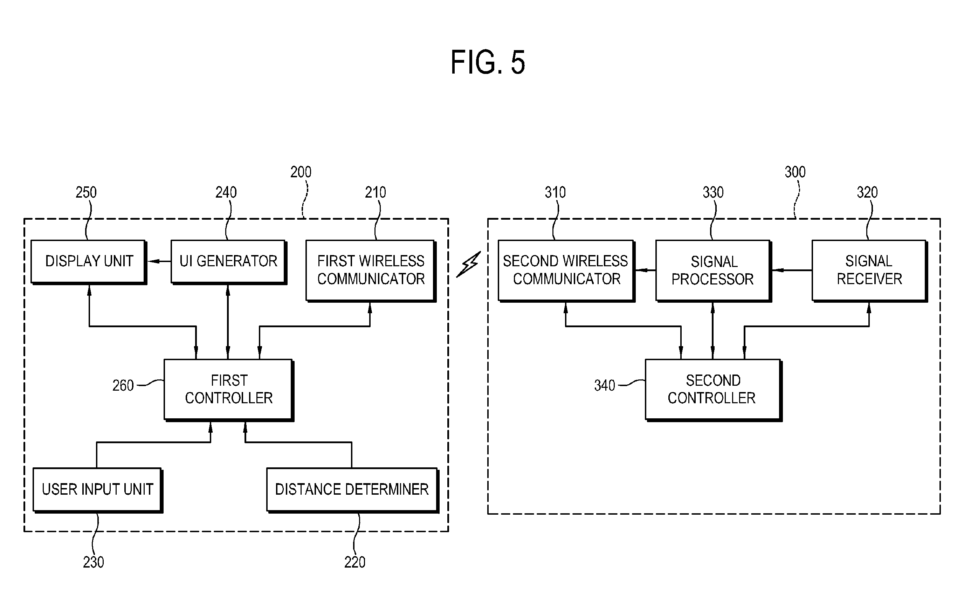

FIG. 5 is a control block diagram of a display system according to a third exemplary embodiment of the present invention. As shown therein, the display system includes a display apparatus 200 and an image processing apparatus 300. The display apparatus 200 includes a first wireless communicator 210, a distance determiner 220, a user input unit 230, a UI generator 240, a display unit 250 and a first controller 260 to control the foregoing elements. The image processing apparatus 300 includes a second wireless communicator 310, a signal receiver 320, a signal processor 330 and a second controller 340 to control the foregoing elements. Repetitive descriptions will be avoided here.

The first wireless communicator 210 performs a wireless communication with the second wireless communicator 310 of the image processing apparatus 300. The first wireless communicator 210 receives an image signal from the second wireless communicator 310, and transmits information on a distance to the second wireless communicator 310.

The distance determiner 220 is equivalent to the distance determiner 140 of the image processing apparatus 100 according to the first exemplary embodiment. According to the present embodiment, the distance determiner 220 is provided in the display apparatus 200 rather than in the image processing apparatus 300.

The user input unit 230 generates an input signal to input the distance between the image processing apparatus 300 and the display apparatus 200, and outputs various control signals by user's manipulation. The user input unit 230 may include a hot key or a touch panel, or a remote controller remotely communicating with the display apparatus 200. The hot key or the touch pad may be formed in an external frame of the display apparatus 200. The touch pad may include a touch panel of the display unit 250. The user input unit 230 may include a general input unit such as a keyboard or a mouse.

The UI (user interface) generator 240 generates UI information according to a control of the first controller 260 and supplies the UI information to the display unit 250. According to the present embodiment, the UI generator 240 generates a distance input window (to be described later).

The display apparatus 200 further includes an image processor (not shown) which processes an inputted image signal to be displayed on the display unit 250. The image processor may include a decoder to decode an image signal.

The display unit 250 displays the processed image signal and the UI information generated by the UI generator 240. The display unit 250 may include a cathode ray tube (CRT), a liquid crystal display (LCD), a plasma display panel (PDP), an organic light emitting display (OLED), etc.

The second wireless communicator 310 receives information on the distance from the first wireless communicator 210, and transmits the compressed image signal to the first wireless communicator 210.

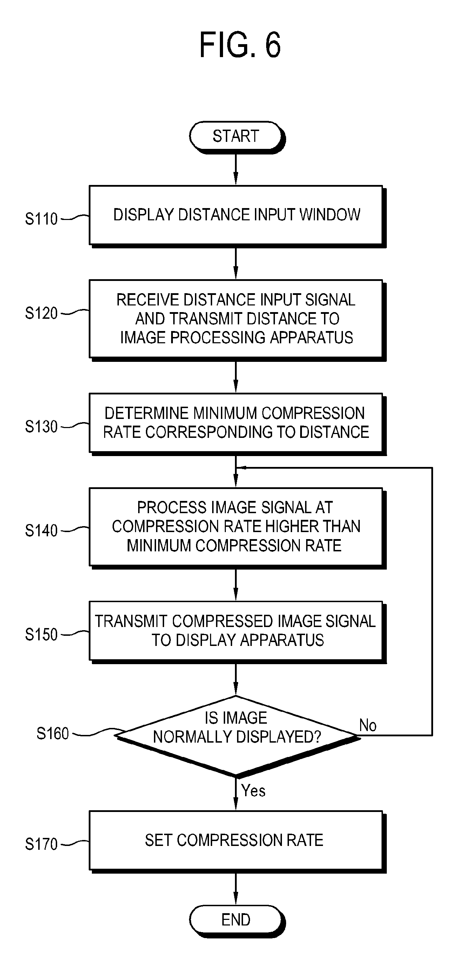

FIG. 6 is a control flowchart to describe a control method of the display system according to the present embodiment. Referring to FIG. 6, the display apparatus 200 and the image processing apparatus 300 will be described.

If a control signal is received through the user input unit 230 to input the distance, the first controller 260 controls the UI generator 240 to generate the distance input window to thereby input the distance, and displays the distance input window on the display unit 250 (S110).

A user inputs the distance on the distance input window by using the information supplied by the distance determiner 220. The first controller 260 receives the input signal about the distance and transmits the signal to the image processing apparatus 300 (S120). That is, according to the present embodiment, the information on the distance may be supplied by the display apparatus 200. A user may directly input the distance and experience the adjusted compression rate of the image signal.

The second controller 340 determines the minimum compression rate corresponding to the received distance (S130). The second controller 340 transmits a particular image signal to the display apparatus 200, and receives information on the reception rate of the image signal from the display apparatus 200 again. The display apparatus 200 supplies information on the reception rate of the image signal together with the distance information, to the image processing apparatus 300.

If the maximum transmission rate is determined based on the transmission rate and the reception rate of the image signal, the minimum compression rate of the image signal is determined. The second controller 340 controls the signal processor 330 to process the image signal at a compression rate higher than the minimum compression rate (S140).

The compressed image signal is transmitted to the display apparatus 200 (S150), and the second controller 340 determines whether the image corresponding to the image signal is normally displayed (S160). If it is determined that the image is normally displayed, the second controller 340 sets the compression rate of the image signal and controls to process the image signal at the set compression rate (S170).

If the image is not normally displayed, the second controller 340 adjusts the compression rate again and controls to process the image signal according to the adjusted compression rate. The compression rate is adjusted until the image is normally displayed.

The present invention relates to controlling the compression rate of the image signal depending on the distance between the image processing apparatus and the display apparatus, communication through the wireless communication, or the wireless communication environment.

As described above, the present invention provides an image processing apparatus which outputs an image signal having a compression rate adjusted corresponding to a distance from a display apparatus.

Also, the present invention provides a display apparatus which supplies information on a distance from an image processing apparatus, to an image processing apparatus.

Further, the present invention provides a display system which displays a normal image signal regardless of a distance between an image processing apparatus and a display apparatus or regardless of an external environment for a wireless communication.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image processing apparatus, comprising:
a signal receiver (110) which receives an image signal;
a signal processor (120) which compresses the image signal;
a wireless transmitter (130) which transmits the compressed image signal to a display apparatus wirelessly; and
a controller (150) which controls the signal processor (120) to raise a compression rate of the image signal according to an increased distance between the wireless transmitter (130) and the display apparatus.

2. The image processing apparatus according to claim 1, wherein a transmission rate of the image signal decreases as the compression rate increases.

3. The image processing apparatus according to claim 1 or 2, wherein the controller (150) determines a minimum compression rate of the image signal corresponding to the distance, and controls the compression rate to be the minimum compression rate or above.

4. The image processing apparatus according to claim 3, wherein the controller (150) determines the minimum compression rate by comparing a transmission rate of the image signal with a reception rate of the image signal received by the display apparatus.

5. The image processing apparatus according to any preceding claim, further comprising a storage unit (160) which stores therein a lookup table on the compression rate corresponding to the distance.

6. The image processing apparatus according to any preceding claim, further comprising a distance determiner (140) which determines the distance.

7. The image processing apparatus according to any preceding claim, wherein the wireless transmitter (130) transmits the compressed image signal through IEEE 802.11n.

8. An image processing apparatus, comprising:
a signal receiver (110) which receives an image signal;
a signal processor (120) which compresses the image signal;
a wireless transmitter (130) which transmits the compressed image signal to a display apparatus wirelessly; and
a controller (150) which determines a maximum transmission rate of an image signal by comparing a transmission rate of the image signal transmitted to the display apparatus with a reception rate of the image signal received by the display apparatus, and adjusts a compression rate of the image signal based on the maximum transmission rate.

9. The image processing apparatus according to claim 8, wherein the compression rate decreases as the maximum transmission rate increases.

10. A display apparatus which has a display unit, comprising:
a user input unit (230) which is provided to input a distance from an image processing apparatus supplying an image signal;
a UI (user interface) generator (240) which generates UI information;
a wireless communicator (210); and
a controller (260) which controls the UI generator (240) to display a distance input window on the display unit if a control signal is received through the user input unit (230) to input the distance, and controls the wireless communicator (210) to transmit the inputted distance to the image processing apparatus.

11. The display apparatus according to claim 10, further comprising a distance determiner (140) which determines the distance.

12. A display system which has a display apparatus (200) having a display unit and an image processing apparatus (300) transmitting an image signal to the display apparatus (200) wirelessly, the display system comprising:
the display apparatus (200) comprising a user input unit (230) to input a distance from the image processing apparatus (300);
a UI (user interface) generator (240) to generate UI information;
a first wireless communicator (210);
a first controller (260) which controls the UI generator (240) to display a distance input window on the display unit if a control signal is received through the user input unit (230) to input the distance, and controls the first wireless communicator (210) to transmit the inputted distance to the image processing apparatus (300),
the image processing apparatus (300) comprising a signal receiver which receives the image signal from outside the image processing apparatus (300);
a signal processor (330) which compresses the image signal;
a second wireless communicator (310) which receives the distance from the display apparatus (200) and transmits the compressed image signal to the display apparatus (200); and
a second controller (340) which controls the signal processor (330) to transmit an image signal having different compression rates depending on the received distance, to the display apparatus (200).

13. The display system according to claim 12, wherein the compression rate increases as the distance increases.

14. The display system according to claim 13, wherein the first controller (260) determines a minimum compression rate of the image signal corresponding to the distance, and controls the compression rate to be the minimum compression rate or above.

15. The display system according to claim 14, wherein the first controller (260) determines the minimum compression rate by comparing a transmission rate of the image signal with a reception rate of the image signal received by the display apparatus (200).

16. A control method of an image processing apparatus (300) which transmits an image signal to a display apparatus (200), the control method comprising:
determining a distance from the display apparatus (200);
determining a minimum compression rate of the image signal corresponding to the distance;
processing the image signal to cause a compression rate of the image signal be the minimum compression rate and above; and
transmitting the processed image signal to the display apparatus (200).

17. The control method according to claim 16, wherein the determining the distance comprises receiving information on the distance.

18. The control method according to claim 16, wherein the transmitting the image signal comprises transmitting the compressed image signal through IEEE 802.11n.
